**Europäisches Patentamt**

(19) **European Patent Office**

**Office européen des brevets**

(11) Publication number: **0 293 153 B1**

(12) # EUROPEAN PATENT SPECIFICATION

(45) Date of publication of the patent specification: **27.12.90**

(51) Int. Cl.⁵: **B25J 15/02**

(21) Application number: **88304652.6**

(22) Date of filing: **23.05.88**

(54) **Parallel gripper.**

(30) Priority: **25.05.87 JP 78398/87 U**

(43) Date of publication of application:
**30.11.88 Bulletin 88/48**

(45) Publication of the grant of the patent:
**27.12.90 Bulletin 90/52**

(84) Designated Contracting States:
**DE FR GB IT**

(56) References cited:
**EP-A- 0 062 070**
**US-A- 4 629 237**

(73) Proprietor: **SMC CORPORATION, 16-4,
Shinbashi 1-chome, Minato-ku Tokyo 105(JP)**

(72) Inventor: **Takada, Susumu, SMC CORP. SOKA
KOJO, 19-1 Inari-cho 6-chome, Soka-shi, Saitama(JP)**
Inventor: **Ishibashi, Kouichirou, SMC CORP. SOKA
KOJO, 19-1 Inari-cho 6-chome, Soka-shi, Saitama(JP)**

(74) Representative: **Allam, Peter Clerk et al, LLOYD WISE,
TREGEAR & CO. Norman House 105-109 Strand, London
WC2R 0AE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to grippers for gripping a work in an industrial machine such as a robot. Particularly, it relates to a parallel gripper in which the gripping fingers move along a common linear axis, and of the type which is driven by means of a fluid pressure actuator. A fluid pressure actuated gripper is disclosed in EP-A 0 062 070.

Since a parallel gripper is usually installed on the tip of an arm of a robot or the like, the fluid pressure actuator is required to be compact in order to make the mechanism for supporting and driving the gripper small-scale and light-weight. However, mere contraction of the fluid pressure actuator results in a decrease in the gripping force of the gripper. Thus, when an arm with the gripper installed is started to be moved or stopped suddenly, the gripper can fail to hold the work firmly because of the inertia of the work being held. To alleviate this problem, one may easily think of increasing the pressure of the fluid which operates the actuator. However, increasing the fluid pressure leads to the actuator becoming large in size and heavy, as well as the necessity of introducing a pressure booster or the like because the line air in factory sites is normally kept under a prescribed pressure.

The invention is directed at a compact parallel gripper which is suited for a robot or the like to grip a work and yet can provide a sufficiently large gripping force. The invention makes use of a pair of pistons relatively slidable in a common bore under the pressure of fluid as a fluid pressure actuator for driving the gripping fingers of the parallel gripper. This enables a gripping force substantially twice as large as that available using a single piston to be obtained.

According to the invention a gripper has a pair of fingers movable towards and away from each other by means of a fluid pressure actuator and a pivotal linkage. The fluid pressure actuator comprises a pair of pistons slidable in a bore formed in an actuator body, and defining a pressure chamber therebetween. The fingers are supported on guide members on the actuator body for sliding movement in a direction perpendicular to the axis of the bore, and the pivotal linkage comprises a pair of bent levers, one end of each lever being pivotally mounted on one piston and the other end of each lever being adapted to engage the other piston, with the intermediate bent portion being pivotally coupled to a finger, relative movements of the pistons causing said sliding movement.

Grippers according to the present invention can be of simple structure as can be the supply and discharge system of the pressurised fluid for the actuator. the construction can be further simplified by directly applying a returning force only to one of the pistons, and by carrying out the return of the other piston via a power transmission mechanism which employs the levers as principal components during opening of the fingers to release a work being grasped.

In one preferred embodiment of the invention, the pistons define an additional pressure chamber between one of the pistons and an end of the bore; a first port being provided for feeding pressurised fluid to the pressure chamber to close the finger; and a second port being provided for feeding pressurised fluid to the additional pressure chamber to open the fingers.

In another preferred embodiment, an additional respiratory chamber is defined between one of the pistons and an end of the bore, a part being provided for feeding pressurised fluid to the pressure chamber to close the fingers, and a spring being compressed in the respiratory chamber between the one piston and the end of the bore to open the fingers after release of pressure from the pressure chamber.

In a gripper of the invention, the pair of pistons are driven in the mutually opposite directions by the action of a pressurised fluid supplied to the pressure chamber formed between the pistons, which in turn drive the pair of levers, causing the fingers that are pivotally mounted on the middle portions of the respective levers to grip a work. In this case, the force for gripping the work can be made very large because of the two pistons action on the levers which drive the fingers. Moreover, the disposition of the pistons in a single cylinder bore enables the fluid pressure actuator for driving the gripper to be made very compact.

Embodiments of the invention will now be described by way of example and with reference to the accompanying drawings wherein:

Figure 1 is an exploded perspective view of a first embodiment of the present invention;

Figure 2 is a part-sectional front view of the assembled sectional embodiment of Figure 1;

Figure 3 is a part-sectional side view of the embodiment of Figure 1;

Figure 4 is a part-sectional front view of the first embodiment shown in figure 1 illustrating the gripper with fingers closed;

Figure 5 is a part sectional front view of a second embodiment of the invention;

Figure 6 is a view similar to Figure 5, of a third embodiment of the present invention;

Figure 7 is a longitudinal section taken on the line VII–VII of Figure 6.

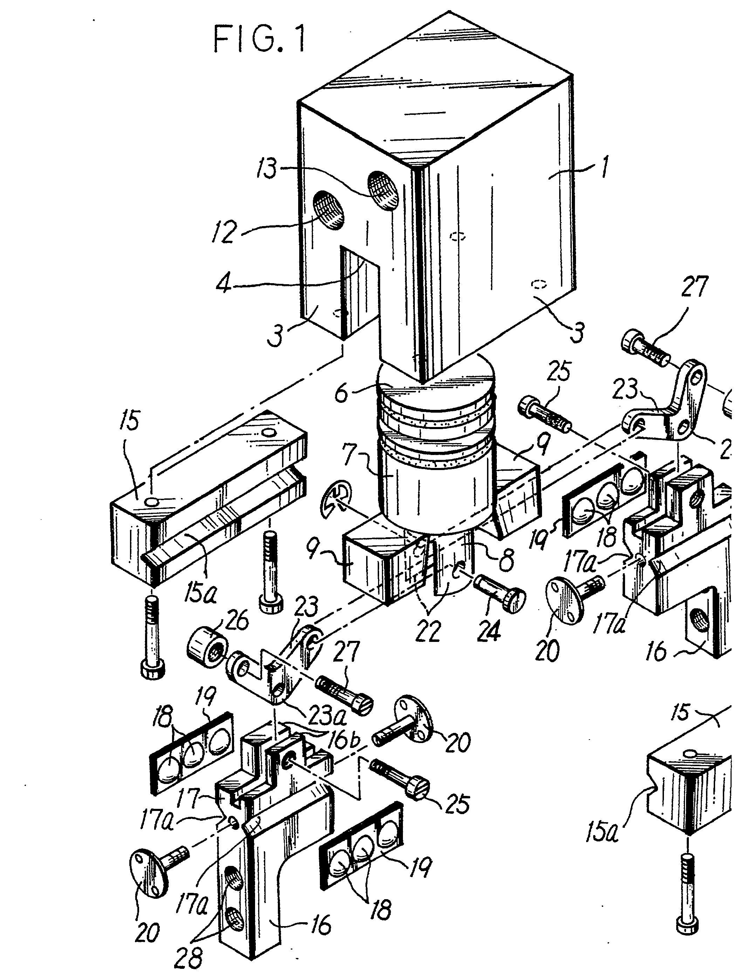

In the first embodiment of the present invention shown in Figures 1 to 4, body 1 of a parallel gripper in the form of an approximately rectangular parallelepiped; has cylinder bore 2 drilled from one side of its ends. Skirt sections 3 extend from opposite sides of the open end of the bore 2, and form grooves 4 therebetween.

A pair of pistons 6 and 7 are freely slidable within the cylinder bore 2 of the body 1 and form a fluid pressure actuator. The pistons 6 and 7 are coupled by a rod 8 of the inner piston 6 which penetrates airtightly through a hole formed in the outer piston, but remain relatively slidable. Further, the outer piston 7 has, on both sides of the hole in which extends the rod 8, guide sections 9 that can slide in the grooves in the axial direction of the cylinder bore 2. In the body 1, between the pistons 6 and 7 and in the vicinity of the bottom wall, there are open ports 12 and 13 for supplying and discharging a pressurised fluid to and from pressure chambers 10 and 11, respectively, that are defined by the pistons 6 and 7, and the body 1.

At the distal ends of the skirt sections 3 there are fixed a pair of rodlike guide members 15 of approximately rectangular cross-section, positioned on both sides of the grooves 4 formed between the skirt sections 3 with shaped guide grooves 15a provided thereon facing with each other. These guide grooves 15a are oriented substantially perpendicularly to the axis of the cylinder bore 2. Base sections 17 of a pair of fingers 16 for gripping a work are disposed between the guide members so as to be slidable along the guide grooves 15a. The base sections 17 of these fingers 16 have guide grooves 17a that are opposed to the grooves 15a with ball holders 19 holding a plurality of freely rotatable balls 18 interposed between the respective pairs of guide grooves 15a and 17a. The ball holders 19 play a role similar to that of the retainers in the case of ball bearings, and their dropping off the guide grooves 17a of the base sections 17 is prevented by stoppers 20 that are screwed on both ends in the longitudinal direction of the/base sections 17 of the fingers 16. Accordingly, the fingers 16 slide by maintaining parallel condition regulated by the guide member, wherein the frictional force between the fingers 16 and the guide members 15 is made small since the fingers are supported via the balls 18. Rollers may be used in place of the balls in the above in which case roller holders will be needed that hold a plurality of freely rotatable rollers instead of the ball holders.

The mechanism for transmitting the driving force of the fluid pressure actuator to the pair of fingers 16 comprises levers 23 for opening and closing the fingers 16 with their parallelism maintained, provided between the pistons 6 and 7, and the base sections 17 of the fingers 16. Supporting members 22 are provided at the distal end of rod 8, and a centre pin 24, in the space therebetween. One end of each lever 23 is bent in its middle portions 23a to form an angle which is somewhat greater than a right angle, is pivotally mounted on the pin 24. The levers 23 are pivotally attached in their bent portions 23a to projections 16b formed on the base sections 17 of the fingers 16 by means of finger pins 25. At the free ends of the levers 23 are mounted rotatable roller pins 27 with rollers 26 which make contact with the bottom surface of the guide sections 9.

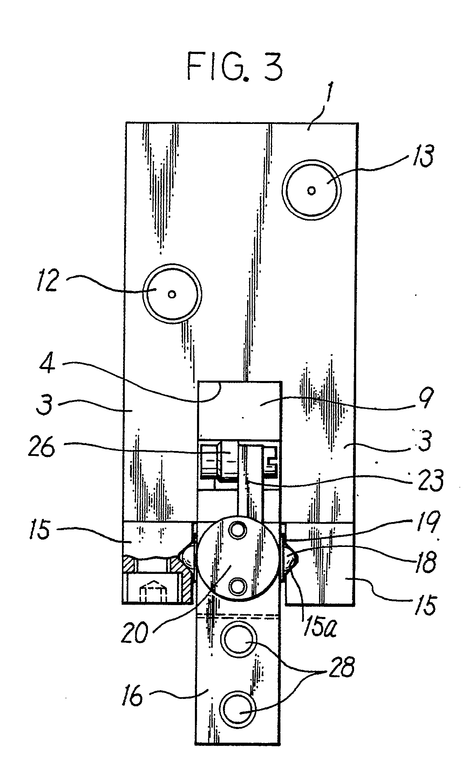

In Figure 3, reference numeral 28 represents a screw hole for fitting a gripping tool to be attached selectively to the fingers 16 in accordance with the object to be gripped by the parallel gripper.

This embodiment of the present invention operates as follows.

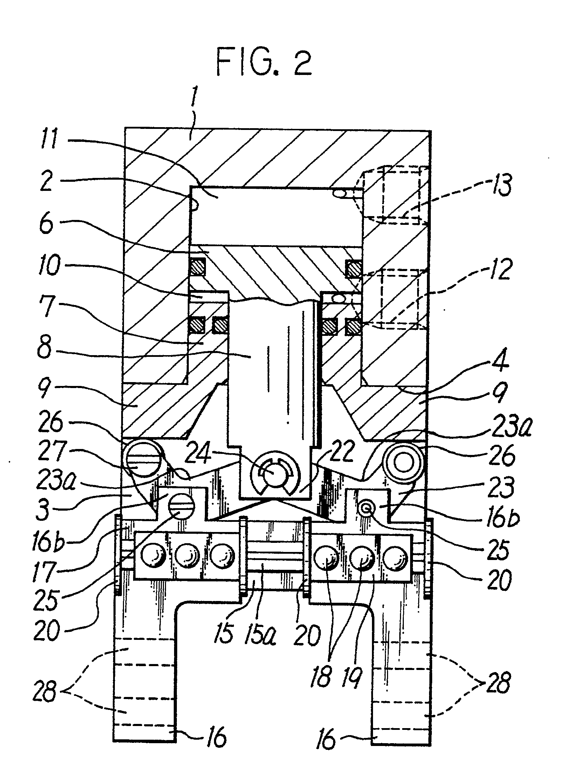

Figure 2 shows the state in which the piston 6 has completed its downward stroke under the action of the compressed air which is supplied to the pressure chamber 11 through the port 13, with the port 12 opened to the atmosphere. The end sections of the pair of levers 23 pivotally mounted on the tip of the rod 8 by means of the centre pin 24 are thus at their lowermost position as shown. Since the sliding motion of the fingers 16 on which are pivotally mounted the middle portions 23a of the levers 23, is constrained by the guide members 15, the middle portions 23a of both levers 23 are forced to expand in the horizontal direction in response the drive of the piston 6 and open the fingers 16. In addition, as the piston 6 is driven downwards as shown, the rollers 26 on the tips of the levers 23 engage the guide sections 9 of the piston 7, and bring the piston 7 to its uppermost position.

When the pressurised fluid is supplied to the pressure chamber 10 through the port 12 and the fluid is discharged from the pressure chamber 11 via the port 13 in this state, the piston 6 is lifted and at the same time the piston 7 is lowered. Accordingly, the ends of the levers 23 that are pivotally mounted on the tip of the rod 8 are pulled up and the tips of the levers 23 whose rollers 26 are pressed downward are lowered, so that the fingers 16 that are pivotally mounted on the levers 23 with the finger pins 25 slide in the direction to come closer with each other. Therefore, the pair of fingers 16 slide in their closing direction to grip a required work 30 between the fingers 16 or between appropriate gripping tools which are fitted to the fingers 16 and 16 by means of the screw fitting holes 28, and this state is maintained by the fluid pressure that is applied on the pistons 6 and 7.

The fingers 16 are slid in the closing direction by the resultant of the driving force obtained from the piston 6 and the driving force obtained from the piston 7, so that the work can be gripped with a force which is substantially twice as large as that of the case of employing a single piston. Moreover, the driving forces of the pistons 6 and 7 are transmitted to the levers 23 and the fingers 16 via the pivotally mounted parts and the rotating parts. Therefore, it is possible to prolong the service life of the gripper by reducing the frictional resistance and the wear of the contacting parts.

Further, the arrangement described above, in which the middle portions 23a of the levers 23 are pivotally mounted on the fingers 16 with the middle portions 23a bent to some extent, is effective to substantially equalise the forces which act during the movement of the fingers 16.

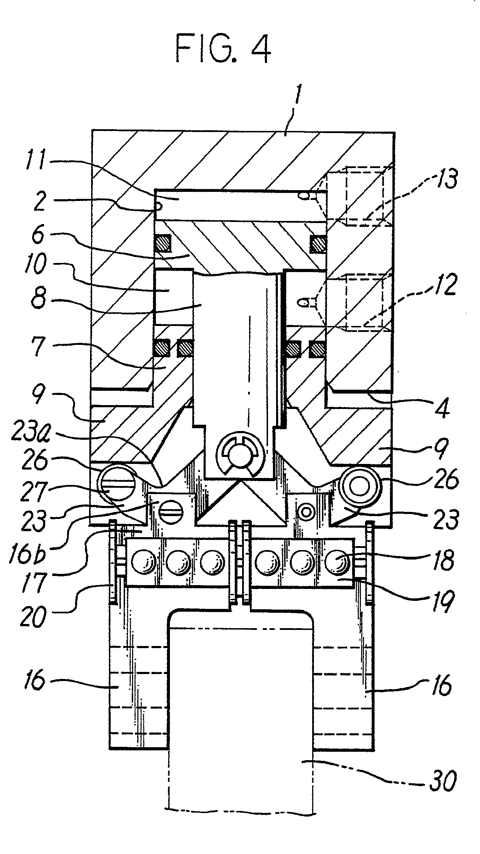

Next, when the supply and discharge of the pressurised fluid to and from the pressure chambers 10 and 11 are reversed from the state illustrated in Figure 4, one end of each of the levers 23 is pressed down by the piston 6, so that both fingers 16 slide in the direction of mutual separation, releasing the gripping force on the work. Further, by the force pushing up the piston 7 with the rollers 26 that make contact with the guide sections 9, the piston 7 is returned to its state shown in Figure 2. In this case, the return of the piston 7 can be accomplished easily because the pressure chamber 10 is opened to the atmosphere.

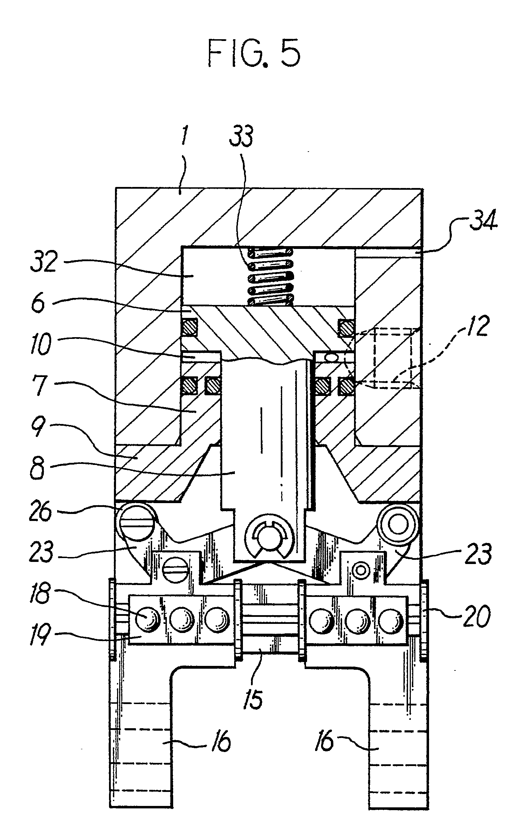

In a second embodiment shown in Figure 5, the reciprocating motion of th piston 6 by the supply and discharge of the pressurised fluid to and from the ports 12 and 13 in the first embodiment, is replaced by the supply of the pressurised fluid to the pressure chamber 10 through a similar port 12 only for the gripping of the work while the return of the fingers 16 is effected by a return spring 33. The return spring 33 which supplies a returning force to the piston 6 is installed compressed in the respiratory chamber 32, vented by a port 34. In other respects the construction of the second embodiment is substantially identical to that of the first embodiment. For this reason, identical or equivalent parts in Figure 5 are given identical symbols, and will not be described again in detail.

In the second embodiment, the piston 6 is moved upwards as shown by the action of the pressurised fluid supplied to the pressure chamber 10 by compressing the spring 33, and the piston 6 is returned by the resilient force of the spring 33 when the pressurised fluid in the pressure chamber 10 is discharged to the outside. Hence, the fingers 16 can be operated by the supply and discharge of the pressurised fluid to and from the pressure chamber 10 alone. In other respects, the operation is similar to that of the first embodiment.

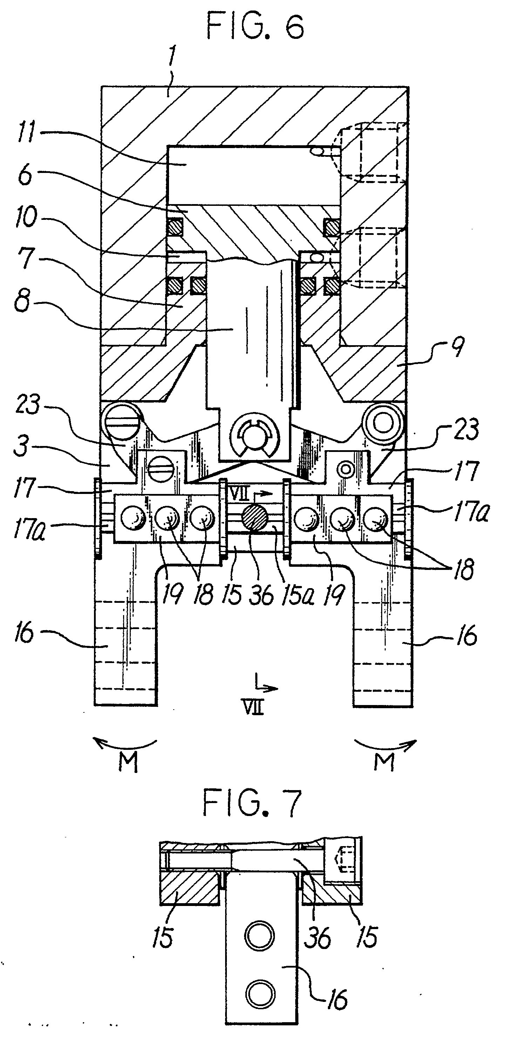

Where a workpiece is gripped between a pair of fingers with a large force, a part of the reaction to the gripping force acts on the fingers as a moment M in the direction which tends to open the pair of fingers as indicated in Figure 6. The moment M acts on the base sections 17 of the fingers 16 in the direction which presses the balls 18 disposed between the guide grooves 15a and 17a, against the inclined groove walls in each guide groove that constitute the V form, within the plane parallel to that of the paper in Figure 6. Because of this, each ball 18 tends to move in the direction to ride on the inclined groove walls of the guide groove, and as a result, the interval between the skirt sections of the body 1 and the guide members thereon is forced to expand by the action of the balls 18.

The expansion in the interval between the guide members permits the riding to some extent of the balls 18 on the inclined groove walls of the guide grooves so that the parallelism of the fingers 16 can be disturbed, making the gripping of the work unstable. Such a problem tends to occur in particular when the body of the gripper is formed with a raw material, such as light metal and synthetic resin, with insufficient strength in order to make the gripper light-weight.

In a further embodiment of the invention shown in Figures 6 and 7, expansion of the finger supporting section is prevented by mutually linking and fixing the centres of the pair of guide members 15 installed on the skirt section 3 with a bolt 36. Although the linking position of the guide members 15 with the bolt 36 is chosen in this embodiment at the centre in the longitudinal direction of the guide members so as not to obstruct the motion of the base sections 17 of the fingers 16, it may be chosen at another position. Further, the mutual linkage may be accomplished by the use of an appropriate mechanism other than a bolt.

The construction and operation of this embodiment are in other respects substantially identical to those of the first embodiment. Further description thereof is unnecessary.

## Claims

1. A gripper having a pair of fingers (16) movable towards and away from each other by means of a fluid pressure actuator and a pivotal linkage, characterised in that the fluid pressure actuator comprises a pair of pistons (6, 7) slidable in a bore (2) formed in an actuator body (1), and defining a pressure chamber (10) therebetween; the fingers (16) are supported on guide members (15) on the actuator body (1) for sliding movement in a direction perpendicular to the axis of the bore; and the pivotal linkage comprises a pair of bent levers (23), one end of each lever (23) being pivotally mounted on one piston (6) and the other end of each lever (23) being adapted to engage the other piston (7), with the intermediate bent portion being pivotally coupled to a finger (16), relative movements of the pistons (6, 7) causing said sliding movement.

2. A gripper according to Claim 1 characterised in that the body (1) has skirt sections (3) extending from either side of an open end of the bore (2), the guide members (15) being supported on the skirt sections (3).

3. A gripper according to Claim 2 characterised in that the guide members (15) are formed with juxtaposed V-shaped grooves (15a); the fingers (16) are formed with complementary V-shaped grooves (17a); and a plurality of balls (18) are disposed in and between the grooves (15a, 17a) in ball holders (19) to support the fingers (16) for said sliding movement thereof.

4. A gripper according to Claim 2 or Claim 3 characterised in that the guide members (15) are linked together.

5. A gripper according to any preceding Claim characterised in that one piston (6) has a rod (8) extending axially therefrom and through an opening in the other piston (7), the rod (8) being slidingly and sealingly received in the opening of the other piston.

6. A gripper according to Claim 5 characterised in that the other piston (7) is formed with guide sections (9) on both lateral sides of the hole therein, the guide sections moving with the other piston and guided by grooves (4) provided on the body (1).

7. A gripper according to Claim 6 characterised in that said one end of each lever (23) is pivotally mounted at the distal end of the rod (8), and the other end of each lever (23) bears a roller (26) which engages one of the guide sections (9) on the other piston (7).

8. A gripper according to any preceding Claim characterised in that the pistons define an additional pressure chamber (11) between one of the pistons (6) and an end of the bore (2); a first port (12) being provided for feeding pressurised fluid to the pressure chamber (10) to close the fingers (16), and a second port being provided for feeding pressurised fluid to the additional pressure chamber (11) to open the fingers.

9. A gripper according to any of Claims 1 to 7 characterised in that an additional respiratory chamber (32) is defined between one of the pistons (6) and an end of the bore (2), a port (12) being provided for feeding pressurised fluid to the pressure chamber (10) to close the fingers (16), and a spring (33) being compressed in the respiratory chamber (32) between the one piston and the end of the bore (2) to open the fingers (16) after release of pressure from the pressure chamber (10).

## Patentansprüche

1. Parallelgreifer mit zwei mittels eines auf Flüssigkeitsdruck ansprechenden Stellorgans zu einander hin und von einander weg beweglichen Fingern sowie einer schwenkbaren Verbindung, dadurch gekennzeichnet, daß das auf Flüssigkeitsdruck ansprechende Stellorgan zwei Kolben (6, 7) aufweist, die in einer Bohrung (2) gleitend geführt werden, die im Stellorgankörper (1) ausgebildet ist und zwischen ihnen eine Druckkammer (10) umgrenzt, daß die Finger (16) von Führungsgliedern (15) auf dem Stellorgankörper (1) zur Durchführung von Gleitbewegungen in einer senkrecht zur Bohrungsachse verlaufenden Richtung getragen werden, und daß die schwenkbare Verbindung zwei gewinkelte Hebel (23) aufweist, von denen ein Hebelende (23) an einem Kolben (6) schwenkbar eingesetzt ist und das andere Hebelende (23) so ausgebildet ist, daß es mit dem anderen Kolben (7) in Eingriff kommt, wobei der Zwischenkrümmungsteil schwenkbar mit einem Finger (16) gekoppelt ist und die relativen Bewegungen der Kolben (6, 7) die gleitende Bewegung verursachen.

2. Parallelgreifer nach Anspruch 1, dadurch gekennzeichnet, daß der Körper (1) Schürzenabschnitte (3) besitzt, die sich beiderseits eines offenen Endes der Bohrung (2) erstrecken, wobei die Führungsglieder (15) von den Schürzenabschnitten (3) getragen werden.

3. Parallelgreifer nach Anspruch 2, dadurch gekennzeichnet, daß die Führungsglieder (15) mit nebeneinanderliegenden v-förmigen Rillen (15a) und die Finger (16) mit komplementären v-förmigen Rillen (17a) ausgebildet sind und daß eine Anzahl von Kugeln (18) in und zwischen den Rillen (15a, 17a) in Kugelfassungen (19) sitzen, um die Finger (16) zur Durchführung ihrer Gleitbewegung zu tragen.

4. Parallelgreifer nach einem der vorhergehenden Ansprüche 2 oder 3, dadurch gekennzeichnet, daß die Führungsglieder (15) miteinander verbunden sind.

5. Parallelgreifer nach einem der vorhergehenden Ansprüche 1 bis 4, dadurch gekennzeichnet, daß ein Kolben (6) eine Stange (8) besitzt, die axial von ihm weg und durch eine Öffnung in den anderen Kolben (7) verläuft, wobei die Stange (8) gleitend und abdichtend von der Öffnung des anderen Kolbens aufgenommen wird.

6. Parallelgreifer nach Anspruch 5, dadurch gekennzeichnet, daß der andere Kolben (7) mit Führungsabschnitten (9) auf beiden seitlichen Seiten der darin vorhandenen Bohrung ausgebildet ist, wobei die Führungsabschnitte sich mit dem anderen Kolben bewegen und von den am Körper (1) vorgesehenen Rillen (4) geführt werden.

7. Parallelgreifer nach Anspruch 6, dadurch gekennzeichnet, daß das eine Ende jedes Hebels (23) am distalen Ende der Stange (8) schwenkbar eingesetzt ist und daß das andere Ende jedes Hebels (23) eine Rolle (26) trägt, die mit einem der Führungsabschnitte (9) am anderen Kolben (7) zum Eingriff kommt.

8. Parallelgreifer nach einem der vorhergehenden Ansprüche 1 bis 7, dadurch gekennzeichnet, daß die Kolben eine zusätzliche Druckkammer (11) zwischen einem der Kolben (6) und einem Ende der Bohrung (2) umgrenzen, daß eine erste Öffnung (12) zum Zuführen von Druckflüssigkeit in die Druckkammer (10) vorgesehen ist, um die Finger (16) zu schließen, und daß eine zweite Öffnung zum Zuführen von Druckflüssigkeit zur Zusatzdruckkammer (11) vorgesehen ist, um die Finger zu öffnen.

9. Parallelgreifer nach einem der vorhergehenden Ansprüche 1 bis 7, dadurch gekennzeichnet, daß eine zusätzliche Atmungskammer (32) zwischen einem der Kolben (6) und einem Ende der Bohrung (2) bestimmt ist, daß eine Öffnung (12) für die Zuführung von Druckflüssigkeit zur Druckkammer (10) vorgesehen ist, um die Finger (16) zu schließen, und daß eine Feder (33) in der Atmungskammer (32) zwischen dem einen Kolben und dem Ende der Bohrung (2) zusammengedrückt wird, um die Finger (16) nach der Freisetzung des Drucks aus der Druckkammer (10) zu öffnen.

## Revendications

1. Une pince de préhension comportant une paire de doigts (16) mobiles pour se rapprocher et s'éloigner l'un de l'autre au moyen d'un actionneur à pression de fluide et d'un embiellage pivotant, charactérisée en ce que l'actionneur à pression de fluide comporte une paire de pistons (6, 7) pouvant coulisser dans un alésage (2) formé dans un corps d'actionneur (1) et définissant entre eux une chambre de pression (10); les doigts (16) sont supportés sur des éléments de guidage (15) du corps d'actionneur (1) pour se déplacer en coulissement dans une direction perpendiculaire à l'axe de l'alésage; et l'embiellage pivotant comporte une paire de leviers coudés (23) une extrémité de chaque levier (23) étant montée à pivotement sur un piston (6) et l'autre extrémité de chaque levier (23) étant agencée pour coopérer avec l'autre piston (7), la partie intermédiaire coudée étant couplée à pivotement à un doigt (16), et les mouvements relatifs des pistons (6, 7) provoquant ledit mouvement de coulissement.

2. Une pince de préhension selon la revendication 1, charactérisée en ce que le corps (1) comporte des joues (3) s'étendant à partir de chaque côté d'une extrémité ouverte de l'alésage (2), les éléments de guidage (15) étant supportés sur les joues (3).

3. Une pince de préhension selon la revendication 2, charactérisée en ce que les éléments de guidage (15) comportent des gorges juxtaposées (15a) en forme de V; les doigts (16) comportent des gorges complémentaires (17a) en forme de V; et une pluralité de billes (18) sont disposées dans et entre les gorges (15a, 17a), dans des porte-billes (19), pour supporter les doigts (16) en vue dudit déplacement coulissant de ceux-ci.

4. Une pince de préhension selon la revendication 2 ou la revendication 3, charactérisée en ce que les eléments de guidage (15) sont reliés l'un à l'autre.

5. Une pince de préhension selon l'une quelconque des revendications précédentes, charactérisée en ce qu'un piston (6) comporte une tige (8) s'étendant axialement à partir de celui-ci et traversant une ouverture de l'autre piston (7), la tige (8) étant reçue à coulissement et de manière étanche dans cette ouverture de l'autre piston.

6. Une pince de préhension selon la revendication 5, charactérisée en ce que l'autre piston (7) comporte des parties de guidage (9) des deux côtés latéraux de son ouverture, les parties de guidage se déplaçant avec l'autre piston et étant guidées par des gorges (4) prévues sur le corps (1).

7. Une pince de préhension selon la revendication 6, charactérisée en ce que ladite première extrémité de chaque levier (23) est montée à pivotement sur l'extrémité distale de la tige (8) et l'autre extrémité de chaque levier (23) porte un rouleau (26) qui coopère avec l'une des parties de guidage (9) de l'autre piston (7).

8. Une pince de préhension selon l'une quelconque des revendications précédentes, charactérisée en ce que les pistons définissent une chambre additionnelle de pression (11) entre l'un (6) des pistons et une extrémité de l'alésage (2); un premier orifice (12) est prévu pour délivrer le fluide sous pression à la chambre de pression (10) de manière à fermer les doigts (16), et un second orifice est prévu pour délivrer le fluide sous pression à la chambre additionnelle de pression (11) pour ouvrir les doigts.

9. Une pince de préhension selon l'une quelconque des revendications précédentes, charactérisée en ce qu'une chambre additionnelle (32) respiratoire est définie entre l'un (6) des pistons et une extrémité de l'alésage (2), un orifice (12) étant prévu pour délivrer le fluide sous pression à la chambre de pression (10) pour fermer les doigts (16), et un ressort (33) étant comprimé dans la chambre (32) respiratoire entre ledit piston et l'extrémité de l'alésage (2) de manière à ouvrir les doigts (16) après le relâchement de pression de la chambre de pression (10).

# FIG. 1

# FIG. 2

FIG. 3

# FIG. 4

# FIG. 5

## FIG. 6

## FIG. 7